# EUROPEAN PATENT APPLICATION

(11) **EP 4 546 140 A1**
(43) Date of publication of application: **30.04.2025**
(21) Application number: 24208962.1
(22) Date of filing: 25.10.2024
(51) Int. Cl.: G06F 11/07, G06F 11/34

(54) **SYSTEM AND METHOD FOR ERROR REPRODUCTION IN WEB-BASED APPLICATIONS**

(30) Priority: 25.10.2023 US 202318494114
(71) Applicant: Noibu Technologies Inc., Ottawa, ON K1S 5K5 (CA)
(72) Inventor: ARDHAM, Vikram Reddy, Ottawa, K1S 5K5 (CA); GRACIE, Charles, Ottawa, K1S 5K5 (CA); SLATINAC, Filip, Ottawa, K1S 5K5 (CA)
(74) Representative: De Clercq & Partners

(57) **Abstract**

Described are various embodiments of a system and computer-implemented method for error reproduction in web-based applications. In some embodiments, method comprises the steps of categorizing, by a processor, error information associated with the reported application error experienced by a plurality of users in a plurality of user sessions to determine a plurality of associated grouped events. In some embodiment, the error information comprises, for each user session, one or more user events and associated application information. The method further comprises the step of isolating from the plurality of associated grouped events, one or more designated grouped events causing the reported application error; and identifying, by the processor, from the one or more designated grouped events, a direct path causing the reported application error. In some embodiments, clustering analysis is performed by doing semantics clustering analysis via one or more machine learning models.

## Description

### FIELD OF THE DISCLOSURE

The present disclosure relates to error evaluation, and, in particular, to a system and method for error reproduction in web-based applications.

### BACKGROUND

The problem of isolating and analyzing user sessions and paths on websites is significant across numerous industries, including e-commerce, user experience design, and web development. It impacts website owners, marketers, and developers who seek to understand how users navigate and encounter bugs/errors on their websites that generate losses in sales and revenue. Correctly identifying user experience degradations, assessing website structure effectiveness and design responsiveness within the vast amounts of session data collected is a challenge.

This background information is provided to reveal information believed by the applicant to be of possible relevance. No admission is necessarily intended, nor should be construed, that any of the preceding information constitutes prior art or forms part of the general common knowledge in the relevant art.

### SUMMARY

The following presents a simplified summary of the general inventive concept(s) described herein to provide a basic understanding of some aspects of the disclosure. This summary is not an extensive overview of the disclosure. It is not intended to restrict key or critical elements of embodiments of the disclosure or to delineate their scope beyond that which is explicitly or implicitly described by the following description and claims.

A need exists for understanding errors and bugs on websites at the most granular reproducible level, to enhance website performance, and find the right guidance for all issues.

In accordance with a first aspect, there is provided a computer-implemented method for identifying a sequence of steps that reproduces a reported application error, comprising the steps of: categorizing, by a processor, error information associated with the reported application error experienced by a plurality of users in a plurality of user sessions, the error information comprising, for each user session, one or more user events and associated application information, to determine a plurality of associated grouped events; and isolating, by the processor, from the plurality of associated grouped events, one or more designated grouped events causing the reported application error; and identifying, by the processor, from the one or more designated grouped events, a direct path causing the reported application error.

In some embodiments, the one or more user events comprise at least one of: a click, a keyboard interaction, or a scroll.

In some embodiments, the method further comprises the steps of, before said categorizing: capturing user activity from said plurality of user sessions; and converting said user activity into said one or more user events and associated application information.

In some embodiments, the method further comprises the step of: displaying, by the processor, the sequence of steps corresponding to the direct path causing the reported application error.

In some embodiments, categorizing comprises the steps of: pre-processing, by the processor, the one or more user events and associated application information into a plurality of embeddings; and clustering, by the processor, the plurality of embeddings into the plurality of associated grouped events by performing semantics clustering analysis via one or more machine learning models.

In some embodiments, the one or more machine learning models uses a transformer architecture.

In some embodiments, the associated application information comprises at least one of: cascading style sheet (CSS) elements, hypertext markup language (HTML) elements, a uniform resource locator (URL), text, and screen recordings.

In some embodiments, the pre-processing is done by, at least in part, combining a class and identification (ID) of an HTML element to build one or more CSS groupings.

In some embodiments, the pre-processing comprises utilizing an image source of a user-event.

In some embodiments, the pre-processing comprises masking numerical portions of the text and CSS elements.

In accordance with another aspect, there is provided a system for identifying a sequence of steps that reproduce a reported application error, comprising: a processor for executing instructions; a non-transitory memory coupled to the processor storing instructions that when executed by the processor configures the system to perform the method of: categorizing, by a processor, error information associated with the reported application error experienced by a plurality of users in a plurality of user sessions, the error information comprising, for each user session, one or more user events and associated application information, to determine a plurality of associated grouped events; and isolating, by the processor, from the plurality of associated grouped events, one or more designated grouped events causing the reported application error; and identifying, by the processor, from the one or more designated grouped events, a direct path causing the reported application error.

In accordance with another aspect, there is provided a non-transitory computer-readable medium having statements and instructions stored thereon to be executed by a digital processor to automatically: categorize error information associated with the reported application error experienced by a plurality of users in a plurality of user sessions, the error information comprising, for each user session, one or more user events and associated application information, to determine a plurality of associated grouped events; and isolate from the plurality of associated grouped events, one or more designated grouped events causing the reported application error; and identify, from the one or more designated grouped events, a direct path causing the reported application error.

In some embodiments, the one or more user events comprise at least one of: a click, a keyboard interaction, or a scroll.

In some embodiments, the statements and instructions cause the digital processor to automatically, before said categorizing: capture user activity from said plurality of user sessions; and convert said user activity into said one or more user events and associated application information.

In some embodiments, the statements and instructions further cause the digital processor to automatically: display the sequence of steps corresponding to the direct path causing the reported application error.

In some embodiments, categorizing comprises the steps of: pre-processing the one or more user events and associated application information into a plurality of embeddings; and cluster the plurality of embeddings into the plurality of associated grouped events by performing semantics clustering analysis via one or more machine learning models.

In some embodiments, the one or more machine learning models uses a transformer architecture.

In some embodiments, the associated application information comprises at least one of: cascading style sheet (CSS) elements, hypertext markup language (HTML) elements, a uniform resource locator (URL), text, and screen recordings.

In some embodiments, the pre-processing is done by, at least in part, combining a class and identification (ID) of an HTML element to build one or more CSS groupings.

In some embodiments, the pre-processing comprises utilizing an image source of a user-event.

Other aspects, features and/or advantages will become more apparent upon reading of the following non-restrictive description of specific embodiments thereof, given by way of example only with reference to the accompanying drawings.

### BRIEF DESCRIPTION OF THE DRAWINGS

Several embodiments of the present disclosure will be provided, by way of examples only, with reference to the appended drawings, wherein:
FIG. 1 is a schematic diagram illustrating a system for identifying a sequence of steps that reproduces a reported application error, in accordance with one embodiment;
FIG. 2 is box diagram illustrating a user device and a server of the system of FIG. 1, in accordance with one embodiment;
FIG. 3 is a box diagram illustrating examples of captured user session information, in accordance with one embodiment;
FIG. 4 is a box diagram illustrating exemplary components of the error analysis module of FIG. 1, in accordance with one embodiment;
FIG. 5 is an exemplary process flow diagram illustrating data processing by the system of FIG. 1, in accordance with one embodiment; and
FIG. 6 is a photograph of an exemplary graphical user interface (GUI) generated by the system of FIG. 1, in accordance with one embodiment.

Elements in the several drawings are illustrated for simplicity and clarity and have not necessarily been drawn to scale. For example, the dimensions of some of the elements in the figures may be emphasized relative to other elements for facilitating understanding of the various presently disclosed embodiments. Also, common, but well-understood elements that are useful or necessary in commercially feasible embodiments are often not depicted in order to facilitate a less obstructed view of these various embodiments of the present disclosure.

### DETAILED DESCRIPTION

Various implementations and aspects of the specification will be described with reference to details discussed below. The following description and drawings are illustrative of the specification and are not to be construed as limiting the specification. Numerous specific details are described to provide a thorough understanding of various implementations of the present specification. However, in certain instances, well-known or conventional details are not described in order to provide a concise discussion of implementations of the present specification.

Furthermore, numerous specific details are set forth in order to provide a thorough understanding of the implementations described herein. However, it will be understood by those skilled in the relevant arts that the implementations described herein may be practiced without these specific details. In other instances, well-known methods, procedures and components have not been described in detail so as not to obscure the implementations described herein.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Errors may affect the actions of users in many ways. For instance, as a result of an error, the user may simply cease interacting with the computer system. The user may also refuse or be unable to use the computer system as they intended (e.g., they may be prevented from making a purchase). They may also make a complaint to administrative users. (These should, of course, be understood as merely some examples of possible effects, and not as an exhaustive list.) As would be evident, some effects may be more significant/severe than others. Also, as would be clear, a single error may have more than one effect. For instance, if a user is unable to make a purchase, they may quit (i.e., cease interacting with the computer system). Further, as discussed above, some errors may have no discernable effect on a user's actions and may thus be relatively non-severe. It should be noted, however, that different users may respond differently to different errors. Thus, it may be preferable to gather data related to many users' actions in response to a certain error. More importantly, it can be difficult to accurately isolate and identify the direct path taken that causes the issue outright on the website.

The present disclosure provides a system and method for error reproduction in a computer system, including network based applications, such as e-commerce applications. For example, the system and method allow to effectively and accurately analyze user sessions and paths associated with website interactions that lead to lost revenue from application errors such as website bugs. The system and method provide improved means of correctly identifying a sequence of steps or a session path that reproduces an error in a given software environment. This includes capturing and analyzing a plurality of user events (e.g., clicks, keyboard events, scrolls, etc.) in a plurality of user sessions with associated application data (e.g., Cascading Style Sheets (CSS) elements, HTML elements, etc.). In some embodiments, the system and method use the error information in an advanced and efficient way to understand and optimize user interactions on websites. While the following disclosure is mainly directed to e-commerce applications, the skilled person in the art will appreciate that other types of applications may also benefit from the disclosure.

Note that the term `error' as used herein should be interpreted broadly. 'Errors' includes, but are not limited to, 'bugs', 'glitches', flaws in code, problems resulting from unexpected user input, logic errors, display errors, interface errors, status and/or network communication errors, and/or anything else that results in less-than-optimal performance of the computer system. Additionally, the term `error' may include errors that prevent users from accessing the computer system at all. Similarly, the term `computer system' should be interpreted broadly, as including without limitation websites, games, computer programs, downloaded software, on-line or cloud-based software, distributed systems, and hardware on which the software may be run. In some embodiments, the system of the present disclosure may not distinguish between hardware and software errors, while in other embodiments, such distinctions may be made.

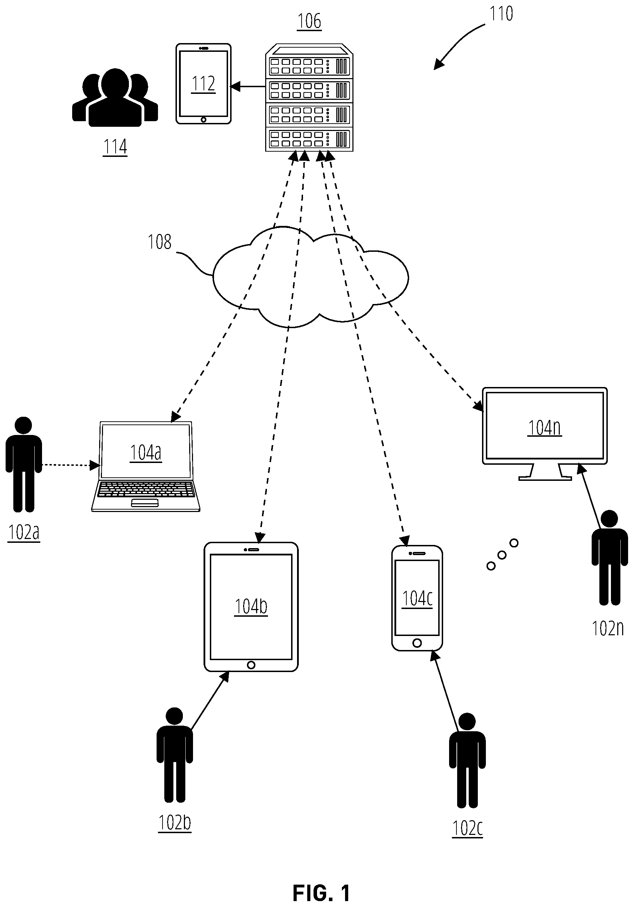

FIG. 1 shows a schematic diagram illustrating an exemplary error reproduction system 100, in accordance with one embodiment. In this example, the system 110 is implemented as a cloud-based software-as-a-service (SaaS) platform or the like. A plurality of users 102a...102n may each use or interact with a corresponding user device 102a, ... 102n to access in a dedicated user session of an online e-commerce application or platform hosted by the server 106 (or other servers coupled to server 106) via the network 108.

In some embodiments, the user-devices 104a-104n typically take the form of any computing or digital processing device, including for example, but not limited to, a desktop computer, a laptop computer, a tablet, a smartphone, a smartwatch or the like. The user devices 104a, ... 104n are each communicatively coupled, directly or indirectly, to a server 106 via a network 108. Although a single server 106 is illustrated in FIG. 1, the skilled person in the art will appreciate that the server 106 may comprise a plurality of communicatively coupled servers or the like. In some other embodiments, the system may allow partial or full offline functionality, and thus not require, or require in a limited fashion, the server 106. More generally, the functionality discussed herein may also be implemented on one or more computing devices or systems. The system 110 further configures the server 106 to provide outputs to a device 112 accessible by one or more administrative users 114 regarding application errors experienced by the users 102a ... 102n.

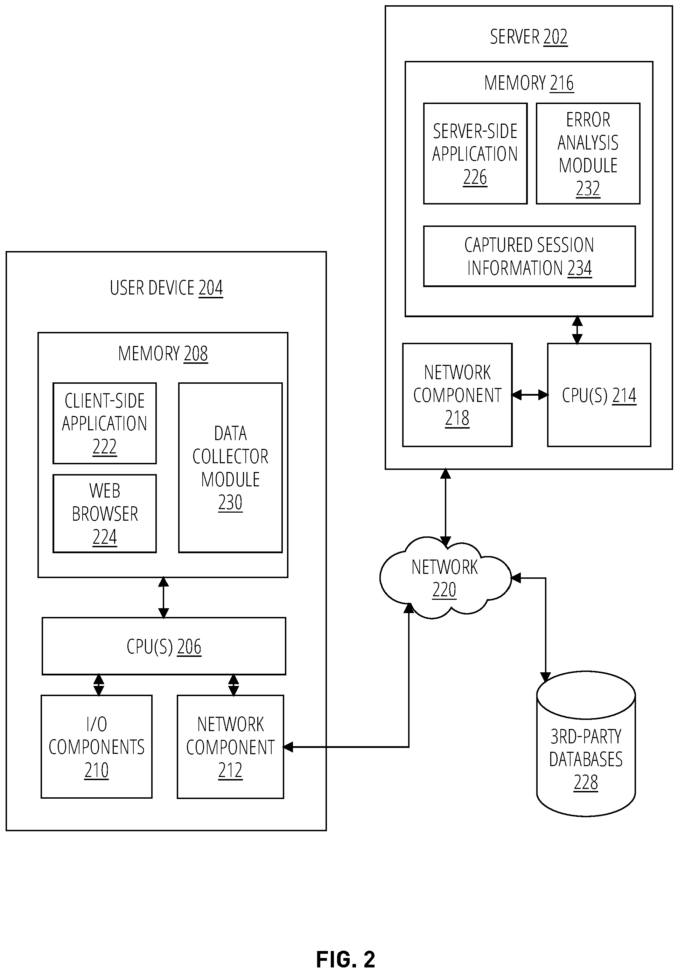

FIG. 2 is a block diagram illustrating an exemplary user device 204 and server 202, both of which are computing or digital processing devices (corresponding for example to any user device 104 and server 106 of FIG. 1, respectively). The user device 204 thus comprises one or more digital processors (e.g., CPU(s) 206), a memory 208, I/O components 210, and a network component 2122. The server 202 similarly comprises one or more processors (e.g., CPU(s) 214), a memory 216 and a network component 218. In this example, the server 202 may be configured to provide the e-commerce functionality in parallel with the error monitoring and analysis functionality. However other implementations may have the server 202 be a dedicated error monitoring server coupled to one or more servers providing the e-commerce functionality.

In some embodiments, the memories 208 and 216 may comprise any known form of computer memory or storage. This may include, for example, but without limitation, storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory, solid state memory or other memory technology, CDROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the device or accessible or connectable thereto. Any method, application or module herein described may be implemented using computer readable/executable instructions that may be stored or otherwise held by such computer readable media and executed by the one or more processors.

In some embodiments, the CPU(s) 206 and 214 may include any known type of digital processor or the like. This can include general purpose processors (e.g., x86 or the like), embedded processors, or programmable processors (e.g., field programmable gate array processors or FPGA). Further, unless the context clearly indicates otherwise, any processor set out herein may be implemented as a singular processor or as a plurality of processors. The plurality of processors may be arrayed or distributed, and any processing function referred to herein may be carried out by one or by a plurality of processors, even though a single processor may be exemplified.

The network component 212 and 218 each may be configured to enable the computing device to communicate and/or exchange data with other components, to access and connect to network resources, to serve applications, and/or perform other computing applications by connecting to a network 220. The network 220 can be a single network or multiple connected networks capable of carrying data, including the Internet, an Ethernet network, integrated services digital network (ISDN), digital subscriber line (DSL), coaxial cable, fiber optics, satellite, mobile, wireless (e.g. Wi-Fi,Bluetooth, WiMAX), SS7 signaling network, fixed line, local area network, wide area network, to name a few examples.

The input/output components (e.g., I/O components 210) of the user device 204 allow communication with a human user via an associated input, output, or input/output device such as a keyboard, a mouse, a touchscreen, and display. The display may be used to generate a graphical user interface (GUI) or the like. In the case where the user device 204 is used by an administrator, the GUI is used to provide information about the application errors encountered and their analysis.

As mentioned above, in some embodiments, the system may be configured using a client-server model or the like. The user device 204 may comprise a client-side application 222 in memory 208 which, upon being executed by the CPU(s) 206 allow the user device 204 to communicate with the server 202 via the network component 212. Other embodiments may have the user device 204 connecting to server 202 via a web browser 224 or the like. The server 202 may comprise in the memory 216 a server-side application 226 that allows the CPU(s) 214 to respond to or communicate with the user device 204 via the network component 218. In addition, the error analysis module 232 may use the captured session information 234 retrieved, in some embodiments, from the user device 204 to analyze and determine the steps needed to reproduce the application error.

In some embodiments, user session information may be captured from recorded user sessions (e.g., screen recordings), for example via a data collector module 230 stored in memory 208 of the user device 204. The data collector module 230 may be a separate application or script accessed or downloaded via a web page.

In some embodiments, different modules/instructions may be combined or distributed on different devices, in accordance with different implementations.

In some embodiments, the server 202 and/or user device 204 may further be configured to communicate with one or more 3rd-party databases 228 via network 220. This may include , for example, one or more 3rd-party servers or databases relating to different services, for example email servers, scheduling systems, or the like.

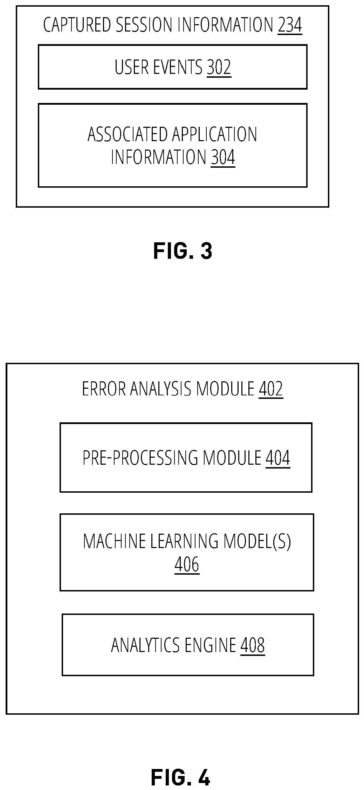

FIG. 3 is a block diagram illustrating examples of captured session information 234, in accordance with one embodiment. In this example, the captured session information 234 includes a plurality of recorded user events or user-event information 302 in combination with associated application information 304. In some embodiments, user events or user-event information 302 may include any measurable action taken by a user, including, without limitation, "clicks", keyboard events or inputs, scrolling, buttons "clicked", etc. These may be triggered by the user via any known input methods, including keyboards, a computer mouse, touch screens or the like on one or more user devices. In some embodiments, the associated application information 304 may include any recorded or captured application-related data associated directly or indirectly with the user actions. These may include application information such as cascading style sheet (CSS) elements, hypertext markup language (HTML) elements - such as HTML requests, one or more uniform resource locator (URLs) accessed, text and/or image information, etc. In some embodiments, these may also include user device information, including hardware specifications and/or software/browser versions, including operating system information.

In some embodiments, the user-event information 302 and associated application information 304 may be captured from recorded user sessions. For example, in some embodiments, the user-event information may be captured on the client side. For example, the session information may be collected from users accessing the e-commerce application. A data collector module 230 may be provided as a script that is downloaded and run as part of the e-commerce application and/or embedded in a webpage of the e-commerce application. The data collector script may be an initial script downloaded and run in order to capture any potential errors resulting when loading the e-commerce application. The browser information may provide information about the browser version, plug-ins, etc. as well as information about the operating system of the user's device. The data collection method may capture initial document object model (DOM) of the e-commerce application. The DOM provides an initial starting point view of the application. User events or user-event information, such as mouse movement, clicks, keyboard inputs, buttons clicked, scrolling, etc. are captured, which in coordination with the initial DOM and browser information may be used to re-create the user's particular session. Application information such as HTML requests and the results, possibly including resulting errors, are captured as well. The captured information is transmitted to the server (e.g., server 202) for further processing. In some embodiments, the recorded user session information may be used to produce a human-viewable reconstruction of the user session. The user reconstruction may be in a video or image format.

FIG. 4 is a block diagram illustrating different exemplary components of the error analysis module 402. Before being used by the machine learning models, the raw user-event information 302 and/or associated application information 304 may be pre-processed via a pre-processing module 404, one or more machine learning model(s) 406, and an analytics engine 408.

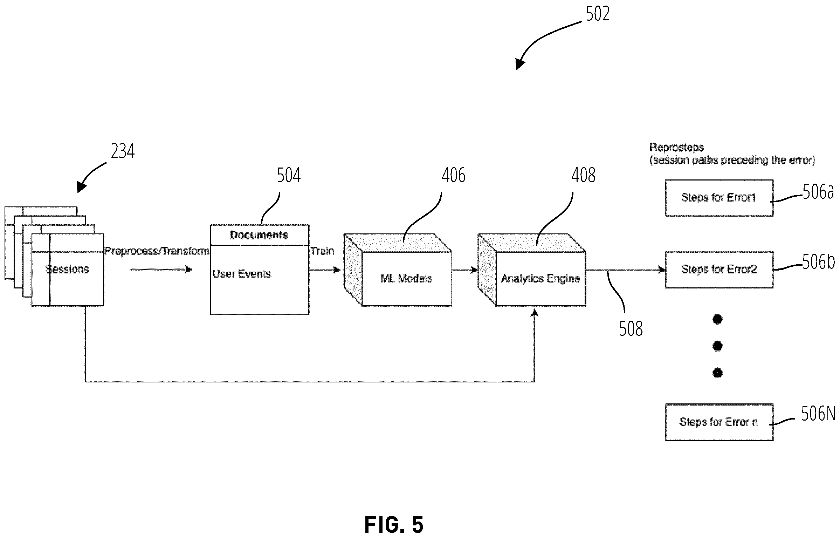

FIG. 5 shows an exemplary box diagram 502 illustrating the flow of information and training of the system 110, in accordance with one embodiment. In this example, the captured session information 234 is pre-processed to generate a plurality of embeddings that can then be processed by the one or more machine learning models 406. Different ways of pre-processing the raw user-event and the associated application information can be considered. This may include known techniques such as tokenization, word removal, etc. In some embodiments, pre-processing may also include additional steps that provide an improved efficiency in the e-commerce context. These may include, for example:
- Combining a class and ID of an HTML element to build one or more CSS groupings;
- Masking numerical elements in capture text data and CSS elements; and
- Truncating text data after a designated number of characters (e.g., 50)

In some embodiments, an image source of a "click" event (for example from a screen recording) may be used and analyzed instead of using the non-visual "click" event information. Typically, one or more pre-processing techniques may be used to transform and normalize the collected raw user-event information and associated application information into a plurality of vector embeddings processable by the one or more machine learning models. These are stored in a plurality of documents or files 504. The pre-processed embeddings are then used to train the one or more machine learning models 406.

Once pre-processed, the embeddings are sent to one or more machine learning models 406 trained to perform text classification by learning the patterns existing in all of the user-event information and associated application information. In some embodiments, the machine learning models 406 are semantics clustering models trained to classify or group the embeddings into different topics. This is accomplished by using the semantic meaning of words to quantify similarity between different pieces of text. In some embodiments, the machine learning models 406 may comprise one or more neural networks, including using a transformer deep learning architecture configured to perform natural language processing. The machine learning models 406 are trained/configured to provide one or more associated grouped events across the different user sessions. The grouped events are categorized into easily identifiable categories.

The analytics engine 408 may use the grouped events generated by the ML models 406 to identify and isolate (508) the session paths (e.g., series of steps 506a, 506b, ... 506N) preceding the identified application errors 1, 2, ... N. The series of steps may be provided to an administrative user in the form of a graphical user interface.

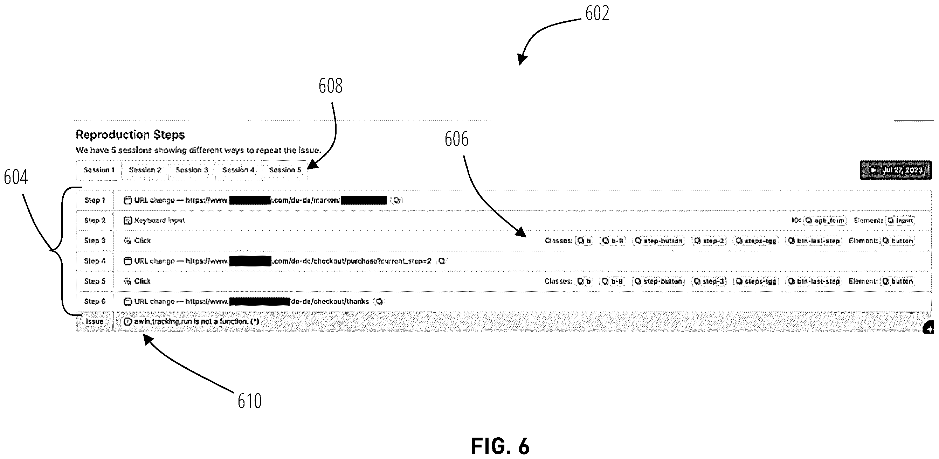

FIG. 6 shows an exemplary graphical user interface (GUI) 602 that can be displayed, for example, to a web site administrator via a digital display of a user device (e.g., device 112 in FIG. 1) to illustrate a series of steps that reproduce the reported application error. In this example, a plurality of tabs 608 are provided, each associated with a different user session. For each session (e.g., session 1), a listing of user events and application data/response 604 is shown leading to the reported error 610. Also shown are the CSS/HTML classes or elements associated with the user actions.

While the present disclosure describes various embodiments for illustrative purposes, such description is not intended to be limited to such embodiments. On the contrary, the applicant's teachings described and illustrated herein encompass various alternatives, modifications, and equivalents, without departing from the embodiments, the general scope of which is defined in the appended claims. Information as herein shown and described in detail is fully capable of attaining the above-described object of the present disclosure, the presently preferred embodiment of the present disclosure, and is, thus, representative of the subject matter which is broadly contemplated by the present disclosure.

## Claims

1. A computer-implemented method for identifying a sequence of steps that reproduces a reported application error, comprising the steps of:
categorizing, by at least one processor, error information associated with the reported application error experienced by a plurality of users in a plurality of user sessions, the error information comprising, for each user session, one or more user events and associated application information, to determine a plurality of associated grouped events; and
isolating, by the at least one processor, from the plurality of associated grouped events, one or more designated grouped events causing the reported application error; and
identifying, by the at least one processor, from the one or more designated grouped events, a direct path causing the reported application error.

2. The computer-implemented method of claim 1, wherein said one or more user events comprise at least one of: a click, a keyboard interaction, or a scroll.

3. The computer-implemented method of claim 1, further comprising the steps of, before said categorizing:
capturing, by the at least one processor, user activity from said plurality of user sessions; and
converting, by the at least one processor, said user activity into said one or more user events and associated application information.

4. The computer-implemented method of claim 1, further comprising the step of:
displaying, by the at least one processor, the sequence of steps corresponding to the direct path causing the reported application error.

5. The computer-implemented method of claim 1, wherein said categorizing comprises the steps of:
pre-processing, by the at least one processor, the one or more user events and associated application information into a plurality of embeddings; and
clustering, by the at least one processor, the plurality of embeddings into the plurality of associated grouped events by performing semantics clustering analysis via one or more machine learning models.

6. The computer-implemented method of claim 5, wherein said one or more machine learning models uses a transformer architecture.

7. The computer-implemented method of claim 5, wherein said associated application information comprises at least one of: cascading style sheet (CSS) elements, hypertext markup language (HTML) elements, a uniform resource locator (URL), text, and screen recordings.

8. The computer-implemented method of claim 7, wherein said pre-processing is done by, at least in part, combining a class and identification (ID) of an HTML element to build one or more CSS groupings.

9. A system for identifying a sequence of steps that reproduce a reported application error, comprising:
at least one processor for executing instructions;
a non-volatile memory coupled to the at least one processor storing instructions that when executed by the at least one processor configures the system to perform the method of:
categorizing error information associated with the reported application error experienced by a plurality of users in a plurality of user sessions, the error information comprising, for each user session, one or more user events and associated application information, to determine a plurality of associated grouped events; and
isolating from the plurality of associated grouped events, one or more designated grouped events causing the reported application error; and
identifying, from the one or more designated grouped events, a direct path causing the reported application error.

10. A non-transitory computer-readable medium having statements and instructions stored thereon to be executed by at least one digital processor to automatically:
categorize error information associated with the reported application error experienced by a plurality of users in a plurality of user sessions, the error information comprising, for each user session, one or more user events and associated application information, to determine a plurality of associated grouped events; and
isolate from the plurality of associated grouped events, one or more designated grouped events causing the reported application error; and
identify, from the one or more designated grouped events, a direct path causing the reported application error.

11. The non-transitory computer-readable medium of claim 10, wherein the statements and instructions cause the digital processor to automatically, before said categorizing:
capture user activity from said plurality of user sessions; and
convert said user activity into said one or more user events and associated application information.

12. The non-transitory computer-readable medium of claim 10, wherein the statements and instructions further cause the digital processor to automatically:
display the sequence of steps corresponding to the direct path causing the reported application error.

13. The non-transitory computer-readable medium of claim 10, said categorizing comprises the steps of:
pre-processing the one or more user events and associated application information into a plurality of embeddings; and
clustering the plurality of embeddings into the plurality of associated grouped events by performing semantics clustering analysis via one or more machine learning models.

14. The non-transitory computer-readable medium of claim 10, wherein said one or more machine learning models uses a transformer architecture.

15. The non-transitory computer-readable medium of claim 10, wherein said associated application information comprises at least one of: cascading style sheet (CSS) elements, hypertext markup language (HTML) elements, a uniform resource locator (URL), text, and screen recordings.
